(19) Europäisches Patentamt
European Patent Office
Office européen des brevets

(11) **EP 2 460 003 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(21) Anmeldenummer: **10739349.8**

(22) Anmeldetag: **29.07.2010**

(51) Int Cl.:
**G01N 30/86** (2006.01)

(86) Internationale Anmeldenummer:
**PCT/EP2010/061005**

(87) Internationale Veröffentlichungsnummer:
**WO 2011/012668 (03.02.2011 Gazette 2011/05)**

(54) **VERFAHREN ZUR FILTERUNG EINES CHROMATOGRAMMS**

METHOD FOR FILTERING A CHROMATOGRAM

PROCÉDÉ DE FILTRAGE D'UN CHROMATOGRAMME

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.07.2009 DE 102009035587**

(43) Veröffentlichungstag der Anmeldung:
**06.06.2012 Patentblatt 2012/23**

(73) Patentinhaber: **Siemens Aktiengesellschaft 80333 München (DE)**

(72) Erfinder: **PROBST, Frank 76863 Herxheim bei Landau/Pfalz (DE)**

(56) Entgegenhaltungen:
**EP-A2- 0 222 612       EP-A2- 0 295 966
WO-A2-2005/079263**

EP 2 460 003 B1

**Beschreibung**

Die Erfindung betrifft ein Verfahren zur Filterung eines Chromatogramms.

In der Chromatographie wird eine Probe eines zu analysierenden Stoffgemischs durch eine chromatographische Trenneinrichtung geleitet. Aufgrund unterschiedlicher Wanderungsgeschwindigkeiten durch die Trenneinrichtung erreichen die Analyten, also die einzelnen Stoffe des Stoffgemischs, den Ausgang der Trenneinrichtung zu unterschiedlichen Zeitpunkten und werden dort nacheinander mittels eines geeigneten Detektors detektiert. Die Zeit, die die Analyten zum Durchwandern der Trenneinrichtung benötigen, wird als Retentionszeit bezeichnet. Der Detektor erzeugt als Messsignal ein Chromatogramm, das aus einer Basislinie und einer den getrennten Stoffen entsprechenden Anzahl von Peaks besteht. In der Praxis ist das Chromatogramm verrauscht, wobei die einzelnen Peaks mehr oder weniger deutlich aus dem Signalrauschen herausragen. Die Nachweisgrenze eines Analyten wird als ein vorgegebenes Mehrfaches des Rauschens definiert; d. h. die von der rauschfreien Basislinie, also vom Mittelwert des Rauschens aus gemessene Peakhöhe muss mindestens das vorgegebene Mehrfache des Rauschens betragen.

Bei gut aufgelösten Peaks ist die Peakfläche über der rauschfreien Basislinie zur Konzentration des Analyten proportional, wobei die Peakfläche im Gegensatz zur Peakhöhe auch bei unsymmetrischen Peaks genaue Messergebnisse liefert.

Um die analytischen Informationen, also die Peaks, zu isolieren, wird das Chromatogramm durch Tiefpassfilterung geglättet. Für diesen Zweck geeignete Glättungsalgorithmen sind z. B. die gleitende Mittelwertbildung oder das Savitzky-Golay-Filter. Je tiefer die Grenzfrequenz des Tiefpassfilters bzw. je größer die Filterlänge des verwendeten FIR-Filters ist, umso besser ist die Glättung. Jedoch können mit zunehmender Glättung auch die Peaks deformiert und damit die Messgenauigkeit vermindert werden. Je nach dem welche Stoffgemische zu analysieren sind, können die Messapplikationen, z. B. unterschiedliche Trennsäulen in unterschiedlicher Verschaltung, und Messbedingungen innerhalb einer Applikation, z. B. unterschiedliche Temperatur- und Druckprofile in der Trenneinrichtung, sehr verschieden sein und zu entsprechend unterschiedlichen Chromatogrammen führen, was unterschiedlich dimensionierte Filter zur Glättung der Chromatogramme erforderlich macht.

Das Dokument EP 0 295 966 A2 (APPLIED BIOSYSTEMS, 21-12-1988) offenbart ein Verfahren zur Filterung eines Chromatograms, wobei das Hochfrequenzrauschen mittels Filterung im Fourier Frequenzbereich subtrahiert wird.

Der Erfindung liegt die Aufgabe zugrunde, eine aufwandsarme, applikätionsunabhängige universelle Filterung von Chromatogrammen zu ermöglichen.

Gemäß der Erfindung wird die Aufgabe durch das in Patentanspruch 1 angegebene Verfahren mit folgenden Schritten gelöst:

a) unter der Annahme, dass die Form der Peaks (P) in dem Chromatogramm jeweils annähernd einer Gaußfunktion $f(t,\sigma)$ mit Standardabweichung $\sigma$ entspricht und die Fourier-Transformierte $F(f,\sigma)$ der Gaußfunktion $f(t,\sigma)$ das Frequenzspektrum eines Peaks (P) beschreibt, wird eine Grenzfrequenz $f_G(F_G,\sigma)$ ermittelt, bei der die Fourier-Transformierte $F(f,\sigma)$ auf einen vorgegebenen Grenzwert $F_G = F(f_G,\sigma_0)$ abgesunken ist,
b) die Höhe $h_0$, Breite $b_0$ und Retentionszeit $t_{R0}$ eines einzelnen Peaks (P$_0$) aus dem Chromatogramm oder einem unter gleichen Bedingungen zuvor aufgenommenen Chromatogramm werden ermittelt,
c) anhand der Beziehung $\sigma_0/h_0 = K \cdot t_{R0}$ wird der konstante Faktor K ermittelt,
d) anhand der Beziehung $\sigma/h = K \cdot t_R$ wird die funktionale Abhängigkeit der Grenzfrequenz $f_G(F_G,t_R)$ von der Retentionszeit $t_R$ als variable Größe ermittelt und
e) das Chromatogramm wird mit der Grenzfrequenz $f_G(F_G,t_R)$ in Abhängigkeit von der Retentionszeit $t_R$ tiefpassgefiltert.

Die Erfindung beruht auf der Beobachtung, dass das Verhältnis von Breite b zu Höhe h eines Peaks linear mit der Retentionszeit $t_R$ zunimmt, so dass gilt: $b/h = K' \cdot t_R$. Da sich die Form der Peaks, von einigen Ausnahmen abgesehen, mit zunehmender Retentionszeit $t_R$ immer mehr an eine klassische Gaußverteilung annähert, kann ein Peak der Breite b mit hinreichender Genauigkeit durch eine Gaußfunktion $f(t,\sigma)$ beschrieben werden. Die Peakbreite b ist, je nachdem wo sie gemessen wird, ein Mehrfaches der Standardabweichung $\sigma$ und beträgt z. B. bei halber Peakhöhe

$$b = 2\sigma\sqrt{2\ln 2} = 2{,}355\sigma.$$ Daher kann das oben angegebene Verhältnis von Breite b zu Höhe h eines Peaks auch mit $\sigma/h = K \cdot t_R$ beschrieben werden.

Die Höhe h und Standardabweichung $\sigma$ der Gaußfunktion sind über die Beziehung $h = 1/(\sigma\sqrt{2\pi})$ miteinander verknüpft. Der Faktor K kann daher anhand der gemessenen Höhe $h_0$, Breite $b_0$ und Retentionszeit $t_{R0}$ eines einzelnen ausgewählten Peaks bestimmt werden, wobei die Standardabweichung $\sigma_0$ aus der Peakbreite $b_0$ berechnet wird.

Es ist jetzt möglich, die Gaußfunktion $f(t,\sigma)$ in funktionaler Abhängigkeit von der Retentionszeit $t_R$ als variabler Größe auszudrücken: $f(t,t_R)$. Die Fourier-Transformierte $F(f,t_R)$ der Gaußfunktion $f(t,t_R)$ beschreibt dann das von der Retentionszeit $t_R$ abhängige Frequenzspektrum eines Peaks. Für dieses Frequenzspektrum $F(f,t_R)$ wird jetzt ein Grenzwert $F_G$ festgelegt, wobei Frequenzen f mit Häufigkeiten oberhalb dieses Grenzwertes $F_G$ als analytische Informationen und Frequenzen f mit Häufigkeiten unter diesem Grenzwertes $F_G$ als Rauschen angesehen werden. Sowohl der Grenzwert $F_G$ als auch die zu ihm gehörende Grenzfrequenz $f_G$ sind von der Retentionszeit abhängig, d. h. $F_G = F_G(t_R)$ und $f_G = f_G(t_R)$. Das Chromatogramm wird jetzt durch Tiefpassfilterung mit der so ermittelten Grenzfrequenz $f_G(t_R)$ in Abhängigkeit von der Retentionszeit $t_R$ geglättet.

Der zur Bestimmung des Faktors K herangezogene einzelne Peak kann aus dem aktuell auszuwertenden Chromatogramm oder einem früher bei gleicher Messapplikationen und unter gleichen Messbedingungen aufgenommenen Chromatogramm ausgewählt werden. Letzteres schließt ein, dass z. B. bei standardmäßigen Messapplikationen die Werte des Peaks aus beliebigen verfügbaren Quellen entnommen werden.

Gemäß dem oben genannten Verfahrensschritt d) wird anhand der Beziehung o/h = K·$t_R$ die funktionale Abhängigkeit $f_G(F_G,t_R)$ der Grenzfrequenz $f_G$ von der Retentionszeit $t_R$ als variable Größe ermittelt. Dies schließt ein, dass die Umrechnung der funktionalen Abhängigkeit von der Peakbreite b (bzw. Standardabweichung $\sigma$) in die funktionale Abhängigkeit von der Retentionszeit $t_R$ schon früher, z. B. an der Gaußfunktion ($f(t,\sigma) \to f(t,t_R)$) oder ihrer Fourier-Transformierten ($F(f,\sigma) \to F(f,t_R)$) vorgenommen wird.

Die Tiefpassfilterung, beispielsweise eine gleitende Mittelwertbildung, erfolgt vorzugsweise mittels eines FIR-Filters, dessen Filterlänge entsprechend der Grenzfrequenz $f_G(F_G,t_R)$ in Abhängigkeit von der Retentionszeit $t_R$ verändert wird.

Bei der weiteren Erläuterung der Erfindung wird auf die Figuren der Zeichnung Bezug genommen; im Einzelnen zeigen:

Figur 1    ein Beispiel eines Chromatogramms mit einer Vielzahl von Peaks,

Figur 2    ein Beispiel für die Amplitudengänge (Frequenzspektren) von drei Peaks mit unterschiedlichen Retentionszeiten und

Figur 3    einen Ausschnitt aus einem weiteren Chromatogramm.

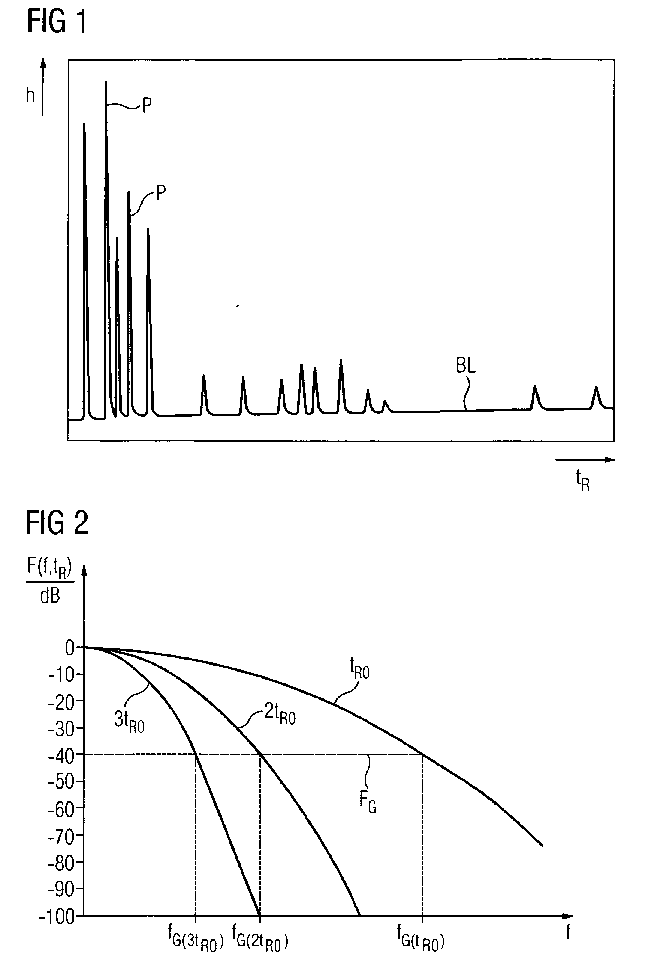

Figur 1 zeigt ein typisches Chromatogramm, das aus einer Basislinie BL und einer Vielzahl von Peaks P mit unterschiedlichen Peakhöhen h und Retentionszeiten $t_R$ besteht. Jeder Peak P resultiert aus der Detektion eines spezifischen Analyten, wobei die Fläche des Peaks P über der Basislinie BL proportional zu der Konzentration des Analyten ist. Wie zu sehen ist, nimmt die relative Breite, also die auf die Peakhöhe bezogene Breite der Peaks P mit zunehmender Retentionszeit $t_R$ zu, wobei sich die Peaks P immer mehr an eine klassischen Gaußverteilung annähern. Die Peaks P können daher bezüglich ihrer Form wie folgt durch eine Gaußfunktion beschrieben werden:

$$f(t, \sigma) = \frac{1}{\sigma\sqrt{2\pi}}\, e^{-\frac{1}{2}\left(\frac{t-t_R}{\sigma}\right)^2}, \qquad\qquad \text{Gl. 1}$$

wobei $\sigma$ die Standardabweichung bezeichnet.

Das Frequenzspektrum eines einzelnen Peaks P ergibt sich aus der Fourier-Transformierten $F(f,\sigma)$ der Gaußfunktion $f(t,\sigma)$ mit:

$$F(f, \sigma) = \int_{-\infty}^{+\infty} f(t, \sigma)\, e^{-j2\pi ft}\, dt = e^{-\frac{1}{2}(2\pi f\sigma)^2}. \qquad\qquad \text{Gl. 2}$$

Das Frequenzspektrum stellt gleichzeitig den Amplitudengang dar, der in der Signaltechnik üblicherweise in Dezibel angegeben wird:

$$\frac{F(f, \sigma)}{dB} = 20 \log_{10}(F(f, \sigma)) = 20 \log_{10}\left(e^{-\frac{1}{2}(2\pi f\sigma)^2}\right)$$

$$= 20\left(-\frac{1}{2}(2\pi f\sigma)^2\right) \log_{10} e = -4{,}343 \cdot (2\pi f\sigma)^2 \qquad \text{Gl. 3}$$

Wie bereits erwähnt, wurde beobachtet, dass das Verhältnis von Breite b zu Höhe h eines Peaks P linear mit der Retentionszeit $t_R$ zunimmt, so dass gilt:

$$b/h = K' \cdot t_R \quad \text{bzw.} \quad \sigma/h = K \cdot t_R. \qquad \text{Gl. 4}$$

Mit Gl. 4 lässt sich Gl. 3 wie folgt umformen:

$$\frac{F(f, t_R)}{dB} = -4{,}343 \cdot (2\pi f \cdot h \cdot K \cdot t_R)^2. \qquad \text{Gl. 5}$$

Figur 2 zeigt, dass entsprechend Gl. 5 der Amplitudengang $F(f, t_R)/dB$ eines Peaks mit zunehmender Retentionszeit $t_R$ abnimmt so dass mit zunehmender Retentionszeit $t_R$ eine geringere Bandbreite zur Signalverarbeitung benötigt wird. Zur Festlegung der Bandbreite für die Signalverarbeitung wird eine Grenzfrequenz $f_G$ gewählt, an der Amplitudengang $F(f, t_R)/dB$ auf einen vorgegebenen Grenzwert $F_G$ abgefallen ist. Wählt man beispielsweise $F_G$ = -40dB, so befinden sich im Amplitudengang immer noch etwa 99% der Signalenergie über diesem Grenzwert und die zu erwartende Signalverfälschung ist minimal. Mit $F_G$ = -40dB erhält man aus Gl. 5 für die Grenzfrequenz:

$$f_{G(-40dB)}(t_R) = \frac{\sqrt{40/4{,}343}}{2\pi \cdot h \cdot K \cdot t_R}. \qquad \text{Gl. 6}$$

Bei Kenntnis der Höhe h und Faktors K eines einzelnen Peaks kann für alle Peaks P des Chromatogramms ein universelles Filter entworfen werden, dessen Grenzfrequenz $f_G$ in Abhängigkeit von der Retentionszeit $t_R$ variiert wird.

Wie im Folgenden erläutert wird, erfolgt die Bestimmung des Faktors K anhand eines einzelnen geeigneten Peaks unter Verwendung der Beziehung nach Gl. 2.

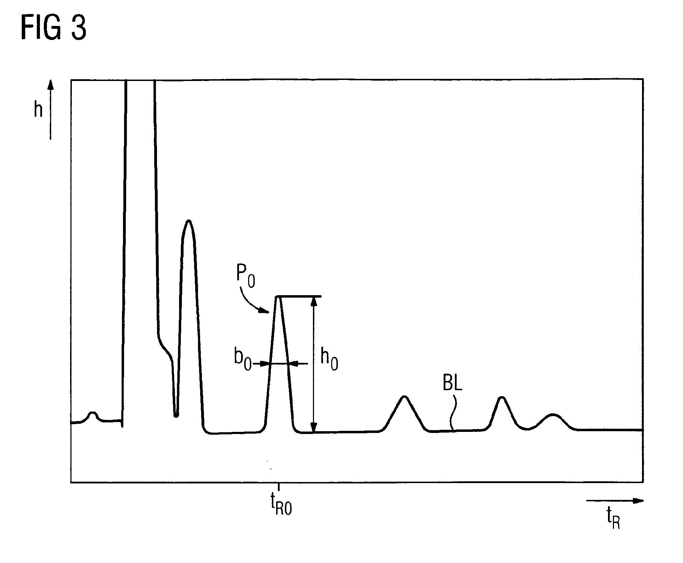

Figur 3 zeigt einen vergrößerten Ausschnitt aus einem anderen Chromatogramm, das unter den gleichen Bedingungen wie das nach Figur 1 aufgenommen wurde. Die Peakhöhe $h_0$, Peakbreite $b_0$ bei halber Peakhöhe und die Retentionszeit $t_{R0}$ eines einzelnen repräsentativen Peaks $P_0$ werden gemessen, wobei z. B. folgende Werte erhalten werden:

$h_0$ = 0,021
$b_0$ = 0, 8s
$t_{R0}$ = 37, 64s.

Damit ergibt sich mit $b = 2\sigma\sqrt{2 \ln 2}$ ) für die Standardabweichung $\sigma_0$ der zugehörigen Gaußfunktion:

$$\sigma_0 = 0{,}34s.$$

Unter Verwendung von GL. 4 erhält man für den Faktor K:

$$K = \frac{\sigma_0}{h_0 \cdot t_{R0}} = \frac{0,34s}{0,021 \cdot 37,64s} = 0,043 .$$

Damit ergibt sich gemäß Gl. 6 für die Grenzfrequenz $f_{G(-40dB)}$ bzw. die -40dB Bandbreite des ausgewählten Peaks $P_0$:

$$f_{G(-40dB)}(t_{R0}) = \frac{\sqrt{40/4,343}}{2\pi \cdot h_0 \cdot K \cdot t_{R0}} = \frac{\sqrt{40/4,343}}{2\pi \cdot 0,021 \cdot 0,43 \cdot 37,64s} = 1,42Hz .$$

Damit können alle Signalanteile mit Frequenzen größer als 1,42Hz praktisch ohne Informationsverlust aus dem hier betrachteten Peak $P_0$ durch Filterung entfernt werden, wobei das Signal/Rausch-Verhältnis bzw. die Nachweisgrenze erhöht werden.

Das gesamte Chromatogramm aus Figur 1 lässt sich jetzt mit der gemäß Gl. 6 in Abhängigkeit von der Retentionszeit $t_R$ variierten Grenzfrequenz

$$f_{G(-40dB)}(t_R) = \frac{\sqrt{40/4,343}}{2\pi \cdot h_0 \cdot K \cdot t_R} = 53,489 \cdot \frac{1}{t_R} \qquad \text{GL. 7}$$

tiefpassfiltern. Hierzu kann beispielsweise ein FIR-Filter verwendet werden. Bei gleitender Mittelwertbildung gilt für die -3dB Grenzfrequenz $f_c$ des FIR-Filters:

$$f_c \approx \frac{f_A}{2N_F} , \qquad \text{Gl 8}$$

wobei $f_A$ die Abtastfrequenz der Analog-/Digital-Umsetzung und $N_F$ die Anzahl der zur Mittelwertbildung herangezogenen Abtastwerte des Chromatogramms bezeichnen. Unter Verwendung von Gl. 7 und Gl. 8 erhält man mit $f_C = f_{G(-40dB)}(t_R)$ folgende, mit der Retentionszeit $t_R$ zu variierende Filterlänge:

$$N_F = \frac{f_A}{2f_{G(-40dB)}(t_R)} = 0,009348 \cdot f_A \cdot t_R ,$$

wobei $N_F$ auf eine ganze Zahl gerundet wird.

Das Signal/Rausch-Verhältnis bzw. die Nachweisgrenze erhöht sich dabei um den Faktor:

$$\frac{S}{N} = \sqrt{N_F} .$$

**Patentansprüche**

1. Verfahren zur Filterung eines Chromatogramms, wobei

    a) unter der Annahme, dass die Form der Peaks (P) in dem Chromatogramm jeweils annähernd einer

Gaußfunktion $f(t,\sigma)$ mit Standardabweichung $\sigma$ entspricht und die Fourier-Transformierte $F(f,\sigma)$ der Gaußfunktion $f(t,\sigma)$ das Frequenzspektrum eines Peaks (P) beschreibt, eine Grenzfrequenz $f_G(F_G,\sigma)$ ermittelt wird, bei der die Fourier-Transformierte $F(f,\sigma)$ auf einen vorgegebenen Grenzwert $F_G = F(f_G,\sigma_0)$ abgesunken ist,
b) die Höhe $h_0$, Breite $b_0$ und Retentionszeit $t_{R0}$ eines einzelnen Peaks $(P_0)$ aus dem Chromatogramm oder einem unter gleichen Bedingungen zuvor aufgenommenen Chromatogramm ermittelt werden,
c) anhand der Beziehung $\sigma_0/h_0 = K \cdot t_{R0}$ der konstante Faktor K ermittelt wird,
d) anhand der Beziehung $o/h = K \cdot t_R$ die funktionale Abhängigkeit der Grenzfrequenz $f_G(F_G,t_R)$ von der Retentionszeit $t_R$ als variable Größe ermittelt wird und
e) das Chromatogramm mit der Grenzfrequenz $f_G(F_G,t_R)$ in Abhängigkeit von der Retentionszeit $t_R$ tiefpassgefiltert wird.

2. Verfahren nach Anspruch 1, **dadurch gekennzeichnet, dass** die Tiefpassfilterung mittels eines FIR-Filters erfolgt, dessen Filterlänge entsprechend der Grenzfrequenz $f_G(F_G,t_R)$ in Abhängigkeit von der Retentionszeit $t_R$ verändert wird.

**Claims**

1. Method for filtering a chromatogram, wherein

a) under the assumption that the shape of the peaks (P) in the chromatogram respectively corresponds approximately to a Gaussian function $f(t,\sigma)$ with standard deviation $\sigma$ and the Fourier transform $F(f,\sigma)$ of the Gaussian function $f(t,\sigma)$ describes the frequency spectrum of a peak (P), a limit frequency $f_G(F_G,\sigma)$ at which the Fourier transform $F(f,\sigma)$ has decreased to a predetermined limit value $F_G = F(f_G,\sigma_0)$ is determined,
b) the height $h_0$, width $b_0$ and retention time $t_{R0}$ of an individual peak $(P_0)$ of the chromatogram, or of a chromatogram previously recorded under the same conditions, are determined,
c) the constant factor K is determined with the aid of the relation $\sigma_0/h_0 = K \cdot t_{R0}$,
d) the functional dependency of the limit frequency $f_G(F_G,t_R)$ on the retention time $t_R$ as a variable quantity is determined with the aid of the relation $\sigma/h = K \cdot t_R$ and
e) the chromatogram is lowpass-filtered with the limit frequency $f_G(F_G,t_R)$ as a function of the retention time $t_R$.

2. Method according to Claim 1, **characterized in that** the lowpass filtering is carried out by means of an FIR filter whose filter length is varied according to the limit frequency $f_G(F_G,t_R)$ as a function of the retention time $t_R$.

**Revendications**

1. Procédé de filtrage d'un chromatogramme, dans lequel

a) en supposant que la forme du pic ( P ) du chromatogramme corresponde respectivement à peu près à une fonction $f(t, \sigma)$ de Gauss d'écart-type $\sigma$ et que la transformée $F(f, \sigma)$ de Fourier de la fonction de Gauss $f(t, \sigma)$ décrive le spectre fréquentiel d'un pic ( P ), on détermine une fréquence $f_G(F_G, \sigma)$ limite à laquelle la transformée $F(f, \sigma)$ de Fourier est abaissée à une valeur $F_G = F(f_G, \sigma_0)$ limite donnée à l'avance,
b) on détermine la hauteur $h_0$, la largeur $b_0$ et le temps $t_{R0}$ de rétention d'un pic ( $P_0$ ) individuel du chromatogramme ou d'un chromatogramme enregistré auparavant dans les mêmes conditions,
c) on détermine le facteur K constant à l'aide de la relation $\sigma_0/h_0 = K \cdot t_{R0}$,
d) on détermine, au moyen de la relation $o/h = K \cdot t_R$, comme grandeur variable, la variation de la fréquence $f_G(F_G,t_R)$ limite en fonction du temps $t_R$ de rétention et
e) on filtre passe-bas le chromatogramme avec la fréquence $f_G(F_G,t_R)$ limite en fonction du temps $t_R$ de rétention.

2. Procédé suivant la revendication 1, **caractérisé en ce qu'**on effectue le filtrage passe-bas au moyen d'un filtre FIR, dont la longueur de filtrage est modifiée conformément à la fréquence $f_G(F_G,t_R)$ limite en fonction du temps $t_R$ de rétention.

# FIG 1

# FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0295966 A2